# FASCICULE DE BREVET EUROPEEN

(11) **EP 0 516 801 B1**
(45) Date de publication et mention de la délivrance du brevet: **11.09.1996**
(21) Numéro de dépôt: 92902097.2
(22) Date de dépôt: 18.12.1991
(51) Int. Cl.: C01B 39/00, B01J 29/70

(54) **ZEOLITHE DE TYPE MTW ET SON PROCEDE DE PREPARATION**
ZEOLITH VOM MTW-TYP SOWIE VERFAHREN ZU SEINER HERSTELLUNG
ZEOLITE OF THE MTW TYPE AND METHOD FOR ITS PREPARATION

(30) Priorité: 21.12.1990 FR 9016256
(43) Date de publication de la demande: 09.12.1992
(73) Titulaire: INSTITUT FRANCAIS DU PETROLE, F-92506 Rueil-Malmaison Cédex (FR)
(72) Inventeur: JOLY, Jean-François, F-75003 Paris (FR); CAULLET, Philippe, F-68110 Illzach (FR); FAUST, Anne, Catherine, F-68200 Mulhouse (FR); BARON, Jacques, F-68100 Mulhouse (FR); GUTH, Jean-Louis, F-68200 Mulhouse (FR)
(74) Mandataire: Andreeff, François
(86) Numéro de dépôt international: FR9101029
(87) Numéro de publication internationale: WO9211203

(56) Documents cités:
- EP-A- 0 124 364
- EP-A- 0 419 334
- US-A- 4 061 717
- US-A- 4 331 643
- JOURNAL OF THE CHEMICAL SOCIETY, CHEMICAL COMMUNICATIONS, No. 14, 15 juillet 1988, pages 920-921, Ed. The Royal Society of Chemistry, Cambridge, GB; M. E. DAVIS ET AL.: "Synthesis of gmelinite and ZSM-12 zeolites with a polymer template"
- JOURNAL OF THE CHEMICAL SOCIETY, CHEMICAL COMMUNICATIONS, No. 19, 1 Octobre 1990, pages 1313-14, Ed. the Royal Society of Chemistry, Cambridge, GB; Z. DAGING et al.: "Synthesis of large single crystals of pentasil-type silica zeolites from non-alkaline medium"
- NEW DEVELOPMENTS IN ZEOLITE SCIENCE AND TECHNOLOGY, PROCEEDINGS OF THE 7TH INTERNATIONAL ZEOLITE CONFERENCE, TOKYO, 17- 22 août 1986, pages 121-128, Kodansha, Tokyo, JP; J. L. GUTH et al.: "New route to pentasyl-type zeolites using a non-alkaline medium in the presence of fluoride ions" cité dans la demande

## Description

L'invention concerne une nouvelle zéolithe de type MTW et un procédé de préparation de cette zéolithe.

En raison de leurs propriétés de sélectivité géométrique et d'échange ionique, les zéolithes sont utilisées industriellement sur une large échelle, aussi bien en adsorption (par exemple séchage de gaz, séparation de paraffines linéaires et branchées, séparation de composés aromatiques etc.) qu'en catalyse (par exemple craquage catalytique, hydrocraquage, isomérisation, oligomérisation etc.).

La composition chimique des zéolithes contenant dans leur charpente les éléments Si et Al peut être représentée par la formule approchée suivante :

M_{2/n}, Al₂O₃, xSiO₂

où M représente un cation de valence n, tel que par exemple un cation alcalin, alcalino-terreux ou un cation organique,
x varie, en fonction des structures, entre 2 et l'infini, auquel cas la zéolithe est une silice microporeuse.

Bien que de nombreuses zéolithes du type aluminosilicate existent dans la nature, la recherche de produits ayant des propriétés nouvelles a conduit au cours des demières années à la synthèse d'une grande variété de ces aluminosilicates à structure zéolithique. Une nouvelle zéolithe, sans équivalent naturel connu et découverte au début des années 1970 est la zéolithe ZSM-12 (US-A-3832449). Cette zéolithe est également connue sous les noms de CZH-5 (GB-A-2079735), Nu-13 (EP-A-0059059), Theta-3 (EP-A-0162719) et TPZ-12 (US-A-4557919). La structure zéolithique qui porte ces différents noms s'est vue attribuée le type structural MTW (R.B.LaPierre et col., Zeolites, 5, 346, 1985). Les zéolithes de type MTW sont toujours synthétisées en présence de cations sodium et d'un nombre très limité de structurants organiques. Pratiquement pour obtenir la zéolithe MTW, il est nécessaire de partir d'un mélange réactionnel contenant les cations Na⁺ et un agent structurant organique, qui peut par exemple être issu de la réaction de la triéthylamine et du diéthylsulfate.

Toutes les zéolithes de type MTW ont été synthétisées jusqu'à présent en milieu classique, c'est à dire dans un milieu alcalin à un pH généralement supérieur à 9, milieu dans lequel l'agent mobilisateur de la silice est l'agent OH⁻. Un autre milieu de synthèse des zéolithes a été récemment découvert : il s'agit du milieu fluorure, dans lequel l'agent mobilisateur de la silice est l'anion F⁻ ; dans ce milieu le pH est généralement inférieur à 10 (voir par exemple J.L. GUTH, H. KESSLER et R. WEY, Proc. Int. Zeolite Conf., Tokyo, Août 17-22, 1986, p. 121). La synthèse d'un nombre limité de structures zéolithiques a déjà été réussie dans ce nouveau milieu, comme par exemple la MFI (EP-B-0.351.311) et la férriérite (EP-B-0.269.503).

Par rapport au milieu de synthèse alcalin (OH⁻), le milieu fluorure présente un certain nombre d'avantages très appréciables. En effet, dans un milieu alcalin, la plupart des zéolithes synthétisées sont métastables : on risque donc au cours de la synthèse de voir apparaitre des phases solides plus stables et de précipiter des phases non désirées. Cette difficulté ne fait que s'accroitre lorsque les quantités à préparer augmentent, c'est-à-dire lorsque l'on passe du stade laboratoire au stade industriel. Par ailleurs, ces zéolithes métastables dans le milieu réactionnel basique ne sont obtenues que grace à une forte sursaturation en espèces actives dans le milieu. Ceci provoque une nucléation rapide et, par conséquent, conduit à des cristaux se situant dans le domaine du micromètre. Or, dans certaines applications, il peut être intéressant de pouvoir disposer de cristaux de plus grande taille de manière à préserver par exemple la stabilité thermique du solide.

De nombreuses applications, notamment en catalyse acide, nécessitent des zéolithes sous une forme protonée et complètement débarrassées de leurs cations de compensations alcalins ou alcalino-terreux introduits lors de la synthèse. On peut aboutir à la forme protonée en procédant à des échanges longs et répétés avec des cations NH₄⁺ par exemple, échanges suivis de calcination pour décomposer ces cations en protons. Ces étapes d'échanges d'ions pourraient être évitées si on pouvait remplacer entièrement les cations alcalins ou alcalino-terreux par des cations décomposables lors de la synthèse, c'est-à-dire des cations NH₄⁺ et/ou organiques. Introduire des cations NH₄⁺ dans le solide lors de la synthèse en milieu basique est impossible car le pH est trop élevé et alors NH₄ ⁺ serait transformé en NH₃. De plus, les synthèses effectuées à des pH où le cation NH₄ ⁺ est stable sont difficiles et longues à cause de la faible solubilité des sources de silice à ces bas pH.

Un avantage supplémentaire des synthèse réalisées en milieu fluorure par rapport à celles réalisées en milieu classique OH⁻ est de conduire à des solides dont les propriétés acides et d'échange ionique sont de natures différentes. Les catalyseurs acides préparés à partir de solides obtenus en milieu fluorure présentent des propriétés catalytiques améliorées. Il est à ce niveau très important de remarquer que la structure cristallographique d'un solide ne suffit pas pour définir entièrement ses propriétés, et plus particulièrement ses propriétés acides qui jouent un rôle primordial en catalyse.

Le document EP-A-0.419.334 décrit ainsi la synthèse de la zéolithe BETA en milieu fluoré, avec des conditions de synthèses proches des conditions de synthèse selon l'invention décrite ci-après.

Contrairement à leurs homologues préparés selon l'art antérieur, les zéolithes de type MTW préparées selon l'invention contiennent du fluor après l'étape de synthèse et d'élimination des composés organiques introduits au cours de la synthèse. Le fluor, comme nous le verrons plus loin, confère aux zéolithes MTW selon l'invention des propriétés acides et d'échange ionique particulières.

Un autre avantage important du milieu de synthèse fluorure est de permettre l'obtention de zéolithe MTW exempte de cations sodium.

L'invention a donc pour objet une nouvelle zéolithe cristalline synthétique de type MTW, ainsi qu'un procédé de synthèse de ladite zéolithe dans lequel les inconvénients cités précédemment sont évités, et qui confère de plus aux zéolithes selon l'invention des propriétés, particulièrement des propriétés acides, améliorées. Le nouveau type de zéolithe suivant l'invention peut être utilisé en adsorption et en catalyse. La zéolithe de type MTW suivant l'invention a (après synthèse) la formule générale approchée suivante :

M_{2/n}, Al₂O₃, xSiO₂

où M représente un proton et/ou un cation métallique (n étant la valence de M).

On verra ci-dessous que dans une méthode de préparation selon l'invention, ledit proton ou cation métallique résulte de la décomposition thermique d'au moins un cation comme par exemple NH₄ ⁺ ou/et d'au moins un agent organique comme la méthylamine (CH₃NH₂) ou le diazabicyclo-1,4 (2,2,2) octane (appelé par la suite "DABCO") présents dans le milieu réactionnel ou/et au moins un cation de métal non décomposable issu ou non du milieu réactionnel comme par exemple un cation alcalin et/ou alcalino-terreux ou un autre cation métallique précisé ci-après.

La zéolithe selon l'invention est notamment caractérisée par :
i) un nombre x compris entre 14 et 800, de préférence entre 20 et 800 (x étant le rapport molaire SiO₂/Al₂O₃),
ii) un diagramme de diffraction des rayons X représenté dans le tableau I de la description,
iii) une teneur en fluorcomprise entre environ 0,005 et 2% en poids, de préférence entre environ 0,01 et 1,5% en poids.

Elle est également caractérisée par le fait qu'elle a été synthétisée en milieu fluorure et en milieu agité.

Cette zéolithe de type MTW selon l'invention présente généralement au moins une dimension des cristaux comprise entre 0,1 µm et 50 µm (1 µm = 10⁻⁶ mètre).

L'invention concerne aussi un procédé de préparation de ladite zéolithe de type MTW, qui consiste en ce que :
a) on forme un mélange réactionnel en solution ayant un pH inférieur à environ 9 et comprenant de l'eau, au moins une source de silice, au moins une source d'aluminium, au moins une source d'agent mobilisateur contenant des ions fluorure (F⁻), au moins une source d'au moins un agent structurant choisi dans le groupe formé par le diazabicyclo-1,4 (2,2,2) octane et un mélange de diazabicyclo-1,4 (2,2,2) octane et de méthylamine, cet agent structurant pouvant éventuellement fournir des cations organiques, éventuellement une source de cations alcalins et/ou alcalino-terreux, ledit mélange réactionnel ayant une composition, en termes de rapport molaire, comprise dans les intervalles de valeurs suivants :
   Si/Al : 6-300, de préférence 10-300,
   F⁻/Si : 0,1-8, de préférence 0,2-6,
   H₂O/Si : 4-50, de préférence 10-50,
   (R+R')/Si:0,5-4,
   R/R': 0,1-infini, de préférence 0,2-infini, où R est le DABCO et R' la méthylamine (R'=0 dans le cas où on n'utilise pas de méthylamine),
b) on maintient ledit mélange réactionnel sous agitation à une température de chauffage comprise entre environ 100 et 250°C, de préférence entre environ 150 et 250°C, jusqu'à ce que l'on obtienne un composé cristallin, et
c) on calcine ledit composé à une température supérieure à environ 350°C et, de préférence, supérieure à environ 450°C.

La présence, après l'étape de calcination (étape c)) destinée à éliminer les composés organiques, de fluor dans les zéolithes de type MTW selon l'invention, à des teneurs comprises de préférence entre 0,01 et 1,5% en poids, entraine des modifications des propriétés acides et d'échange ionique des solides. Ceux ci se distinguent des zéolithes MTW obtenues en milieu classique. En effet, en fonction des conditions de synthèse, les solides selon l'invention sont caractérisés par un spectre de vibration infrarouge dans la région des OH (3800 à 3500 cm⁻¹) qui présente des bandes attribuées aux groupes Si-OH (zone 3730-3750 cm⁻¹ et aux groupes Al-OH (zone 3580-3640 cm⁻¹) moins intense que celle des zéolithes MTW de l'art antérieur de même rapport Si/Al. Corrélativement, la capacité d'échange ionique des zéolithes selon l'invention est généralement inférieure à celle des produits de l'art antérieur.

Les zéolithes MTW selon l'invention, dont la teneur en hydroxyles et les capacités d'échange ionique sont réduites, possèdent de manière surprenante des propriétés acides remarquables comme en témoignent la thermodésorption d'ammoniac et la spectroscopie infrarouge de bases faibles adsorbées telles que, par exemple, l'éthylène et H₂S. Il est donc clair que l'acidité des solides selon l'invention est de nature particulière. Sans nous lier à une théorie particulière, on peut proposer que dans les solides selon l'invention une partie plus ou moins importante des sites acides de charpente du type Si-OH-Al sont remplacés par des sites du type Si-F-AI.

La nature exacte des sites acides contenus dans les zéolithes MTW selon l'invention reste à préciser ; cependant, il semble que l'existence de ces sites particuliers est liée à la présence de fluor dans les solides ou au moins résulte du fait que la synthèse a été réalisée en milieu fluorure.

Par des traitements particuliers, il serait possible d'éliminer tout ou partie du fluor contenu dans les solides selon l'invention sans altérer leur cristallinité. Une technique que l'on peut utiliser pour défluorer lesdits solides consiste à procéder à un traitement dans une solution de NH₄OH à des températures comprises par exemple entre la température ambiante (15 à 25°C) et 150°C (traitement sous pression).

On peut avantageusement chauffer le mélange réactionnel dans un autoclave revêtu intérieurement de polytétrafluoroéthylène (PTFE) entre environ 100 et environ 250°C et de préférence entre environ 150 et environ 250°C, pendant une durée qui peut varier de quelques heures à quelques jours (habituellement de 8 à 1200 heures) selon la température de réaction retenue, jusqu'à l'obtention d'un solide cristallisé que l'on sépare des eaux mères par filtration et qui est ensuite lavé à l'eau distillé.

Le mélange réactionnel doit être agité lors de la période de chauffage dans l'autoclave pour obtenir le solide de type MTW selon l'invention.

De manière avantageuse, on peut préparer ledit mélange réactionnel à un pH compris entre environ 4 et environ 9 et, de préférence, entre environ 6 et environ 9.

Selon un mode préféré de préparation des zéolithes de type MTW selon l'invention, les rapports molaires des constituants du mélange réactionnel sont compris dans les intervalles de valeurs suivants :
Si/Al : 12-100,
F⁻/Si : 0,5-4,
H₂O/Si : 20-40
(R+R')/Si : 0,9-2,1,
R/R': 0,3-infini, où R est le DABCO et R' la méthylamine (R'=0 dans le cas où on n'utilise pas de méthylamine).

On peut éventuellement ajouter audit mélange réactionnel au moins un sel complémentaire dans un rapport molaire sel complémentaire/SiO₂ compris généralement entre 0,1 et 4 et, de préférence, entre 0,2 et 0,5 et/ou au moins un germe de la zéolithe formée selon l'invention dans un rapport pondéral cristal de zéolithe/SiO₂ compris généralement entre 0,01 et 0,1 et, de manière préférée, entre 0,02 et 0,03, de telle sorte que la morphologie, la taille des cristaux ainsi que la cinétique de la réaction de cristallisation peuvent être avantageusement contrôlées.

Le pH du milieu réactionnel, inférieur à environ 9, peut être obtenu soit directement à partir de l'un ou plusieurs des réactifs mis en oeuvre, soit par l'ajout d'un acide, d'une base, d'un sel acide, d'un sel basique ou d'un mélange tampon complémentaire.

De nombreuses sources de silice peuvent être utilisées. On peut citer les silices sous forme hydrogels, d'aérogels, de suspensions colloidales, ainsi que les silices résultants de la précipitation de solutions de silicates solubles ou de l'hydrolyse d'esters siliciques comme l'ester tétraéthylique de l'acide orthosilicique Si(OC₂H₅)₄ ou de complexes comme le fluorosilicate de sodium Na₂SiF₆ ou d'ammonium (NH₄)₂SiF₆.

Parmi les sources d'aluminium utilisées, on choisira de préférence le chlorure d'aluminium hydraté (AlCl₃, 6H₂O), le nitrate d'aluminium hydraté (Al(NO₃)₃, 9H₂O), le sulfate d'aluminium à 16 molécules d'eau ou le fluorure d'aluminium tri hydraté AlF₃, 3H₂O. On peut également citer la pseudo-boehmite.

Par ailleurs, au lieu de partir de sources séparées de silice et d'aluminium, on peut également prendre des sources où les deux éléments sont combinés comme par exemple un gel aluminosilicaté fraichement précipité.

Les anions fluorures F⁻ peuvent être introduits sous forme de sels desdits agents structurants ou d'ammonium ou de métaux alcalins comme par exemple NaF, NH₄F, NH₄HF₂ ou sous forme d'acide comme HF ou encore sous forme de composés hydrolysables pouvant libérer des anions fluorures dans l'eau comme le fluorure de silicium SiF₄ ou le fluorosilicate d'ammonium (NH₄)₂SiF₆ ou de sodium Na₂SiF₆.

Les acides ou les sels acides, les bases ou les sels basiques ajoutés éventuellement en complément pour amener le pH du milieu réactionnel à la valeur désirée peuvent être choisis parmi les acides courants comme, par exemple, HF, HCI, HNO₃, H₂SO₄, CH₃COOH ou les sels acides comme par exemple, NH₄HF₂, KHF₂, NaHSO₄, les bases courantes comme, par exemple, NaHCO₃, Na₂S, NaHS ou les mélanges tampons comme, par exemple, (CH₃COOH, CH₃COONa) ou (NH₄OH, NH₄Cl).

La calcination (étape c)) se déroule avantageusement à une température comprise entre environ 520 et 800°C sous atmosphère de gaz sec, comme par exemple de l'air ou un gaz inerte, de manière à décomposer l'agent structurant présent dans les pores de la zéolithe.

Après l'étape d'élimination des composés organiques (étape c)) et éventuellement de défluoration partielle ou totale, on peut introduire dans la zéolithe de type MTW selon l'invention, par des techniques d'échanges ioniques bien connues de l'art antérieur, au moins un élément de la classification périodique, dont les cations peuvent être préparés en milieu aqueux et choisis dans la famille constituée par les groupes IIA, IIIA, IB, IIB, IIIB, IVB et VIIIA de la classification périodique des éléments. On citera à titre d'exemple des cations alcalins, alcalino-terreux, les cations de terres rares, Fe", Fe‴, Co", Co‴, Ni", Cu", Zn", Ag', Pt".

L'identification des zéolithes de type MTW selon l'invention peut se faire de manière aisée à partir de leur diagramme de diffraction des rayons X. Ce diagramme peut être obtenu à l'aide d'un diffractomètre en utilisant la méthode classique des poudres avec le rayonnement K.α du cuivre. Un étalon interne permet de déterminer précisemment les valeurs des angles 2θ associés aux pics de diffraction. Les différentes distances interréticulaires dₕₖₗ, caractéristiques de l'échantillon, sont calculées à partir de la relation de Bragg. L'estimation de l'erreur de mesure Δdₕₖₗ sur dₕₖₗ se calcule en fonction de l'erreur absolue Δ(2θ) affectée à la mesure de 2θ par la relation de Bragg. En présence d'un étalon interne, cette erreur est minimisée et prise couramment égale à ∓ 0,05°. L'intensité relative I/Io affectuée à chaque valeur de dₕₖₗ est estimée à partir de la hauteur du pic de diffraction correspondant. Cette dernière peut également être déterminée à partir d'un cliché obtenu à l'aide d'une chambre de Debye-Scherrer.

Le tableau I de la description représente le diagramme de diffraction des rayons X des zéolithes de type MTW selon l'invention. Les valeurs sont relatives au rayonnement Kα, du cuivre (λ = 1,5418 Å), les données ont été obtenues à l'aide d'un diffractomètre automatique Phillips APD1700 (tube "Line Fine Focus").

La zéolithe de structure MTW selon l'invention peut être utilisée seule ou en mélange avec une matrice au sein d'un catalyseur.

Ladite zéolithe peut par exemple, après synthèse, être mise en forme en utilisant une matrice qui peut être inerte ou active pour la réaction à promouvoir. Les matrices que l'on emploie sont généralement choisies dans le groupe formé par les argiles, les alumines, la silice, la magnésie, la zircone, l'oxyde de titane, l'oxyde de bore et toute combinaison d'au moins deux des composés précités comme la silice-alumine, la silice-magnésie etc.. Toutes les méthodes connues d'agglomération et de mise en forme sont applicables, telles que par exemple, l'extrusion, le pastillage, la coagulation en goutte etc..

Le catalyseur possède alors une teneur pondérale en zéolithe de type MTW selon l'invention généralement comprise entre 20 et 99,5%, de préférence entre 40 et 95%, et une teneur pondérale en matrice généralement comprise entre 0,5 et 80%, de préférence entre 5 et 60%.

Le catalyseur contenant la zéolithe de structure MTW selon l'invention peut en outre renfermer une fonction hydrogénante ou déshydrogénante consituée en général par au moins un métal ou/et composé de métal choisi parmi les groupes IA, VIB (Cr, Mo, W) et VIII de la classification périodique des éléments, par exemple le platine, le palladium et/ou le nickel.

**TABEAU I**

| 2θ(°) | I/Io | 2θ(°) | I/Io |
|---|---|---|---|
| 7,45 | 82 | 26,37 | 13 |
| 7,66 | 56 | 26,89 | 12 |
| 8,88 | 30 | 28,02 | 9 |
| 12,15 | 2 | 28,51 | 3 |
| 14,79 | 5 | 29,35 | 5 |
| 15,28 | 6 | 30,98 | 6 |
| 18,76 | 10 | 31,79 | 2 |
| 19,14 | 11 | 32,89 | 1 |
| 20,05 | 7 | 33,83 | 3 |
| 20,91 | 100 | 35,68 | 14 |
| 21,91 | 8 | 36,51 | 2 |
| 22,43 | 15 | 36,99 | 3 |
| 23,05 | 39 | 38,49 | 2 |
| 23,31 | 28 | 43,84 | 1 |
| 23,88 | 5 | 44,64 | 4 |
| 24,52 | 4 | 45,64 | 2 |
| 25,20 | 6 | 46,88 | 2 |
| 25,77 | 7 | | |

Les exemples suivants illustrent l'invention sans en limiter la portée.

### EXEMPLE 1

3,37 g de DABCO (0,03 mole) et 2,33 g de solution aqueuse à 40% de méthylamine (0,03 mole de méthylamine) sont dissous dans 17,7 g d'eau. A cette solution sont additionnés goutte à goutte et sous agitation 3 g d'une solution aqueuse à 40 de HF (0,06 mole de HF). Au mélange obtenu on ajoute sous agitation 0,14 g de pseudo-boehmite à 24,6 % d'eau en poids (soit 2 10⁻³ mole Al) et 4,23 g de silice Merck à 15 % d'eau (soit 0,06 mole de SiO₂) et enfin environ 70 mg de cristaux de zéolithe de type MTW synthétisée en milieu fluorure soigneusement broyés (environ 2 % en poids par rapport à la silice engagée). Ce mélange réactionnel est agité pendant 10 minutes à température ambiante.

La composition du mélange réactionnel en terme de rapport molaire est la suivante :
Si/Al=30 ; F⁻/Si=1 ; (R+R')/Si=1 ; R/R'=1 et H₂O/Si=20

Le mélange réactionnel est alors transvasé dans un autoclave de 75 ml revetu de Teflon. La réaction se déroule à 200°C pendant 24 heures. Pendant la synthèse, l'autoclave est continuellement agité, l'axe longitudinal de l'autoclave tourne avec une vitesse d'environ 15 tours/minutes dans un plan perpendiculaire à l'axe de rotation. Après réaction, l'autoclave est refroidi, le solide cristallisé est recueilli par filtration, lavé à l'eau distilé et séché à 80°C pendant 24 heures. Le pH du milieu réactionnel avant et après réaction est d'environ 8.

Le spectre de diffraction des rayons X du produit reccueilli est semblable, après calcination sous air à 550°C, à celui du tableau I de la présente description (structure de type MTW).

Examinée au microscope électronique à balayage, cette zéolithe se présente sous forme de fines aiguilles enchevetrées de dimensions moyennes 5x0,2 µm.

Le rapport molaire SiO₂/Al₂O₃ du solide obtenu est de 126, la teneur pondérale en fluor, après calcination sous air à 550°C, est de 0,5%.

### EXEMPLE 2

Un mélange réactionnel de composition identique à celle de l'exemple 1 est transvasé dans un autoclave de 75 ml en Teflon.

L'autoclave est chauffé à 170°C pendant 12 jours dans les mêmes conditions d'agitation que celles de l'exemple 1.

Le solide receuilli, lavé et séché, présente, après calcination sous air à 550°C, un diagramme de diffraction des rayons X identique à celui du tableau I de la présente description. Son rapport molaire SiO₂/Al₂O₃ est égal à 90, sa teneur pondérale en fluor après calcination sous air à 550°C est de 0,25%.

### EXEMPLE 3

Un mélange réactionnel, dont la composition molaire est indiquée ci-après, est préparé selon un mode opératoire analogue à celui de l'exemple 1. Les quantités de réactifs engagés sont les mêmes sauf en ce qui concerne la masse de pseudo-boehmite qui est ici de 40 mg (soit 6.10⁻⁴ mole d'Al) au lieu de 0,14 g.

La composition molaire du mélange réactionnel est alors la suivante :
Si/Al=100 ; F⁻/Si=1 ; (R+R')/Si=1 ; R/R'=1 ; H₂O/Si=20

Après transfert dans un autoclave de 75 ml revetu de Teflon, le mélange réactionnel est chauffé à 170°C pendant 5 jours sous agitation. Après réaction, le solide obtenu est recueilli par filtration, lavé à l'eau distillé et séché. Il présente, après calcination sous air à 550°C, un diagramme de diffraction des rayons X identique à celui de la présente description. Son rapport molaire SiO₂/Al₂O₃ est de 200. Sa teneur pondérale en fluor après calcination sous air à 550°C, est de 0,7%.

### EXEMPLE 4

3,37 g de DABCO (0,03 mole) et 2,32 g de solution aqueuse à 40% de méthylamine (0,03 mole de méthylamine) sont dissous dans 18,4 g d'eau. A cette solution sont additionnés goutte à goutte et sous agitation 3 g d'une solution aqueuse à 40 de HF (0,06 mole de HF). Au mélange obtenu on ajoute sous agitation 83 mg de AlF₃,₃H₂O (0,01 mole Al) et 4,23 g de silice Merck à 15 % d'eau (soit 0,06 mole de SiO₂) et enfin environ 70 mg de cristaux de zéolithe de type MTW synthétisée en milieu fluorure soigneusement broyés (environ 2 % en poids par rapport à la silice engagée). Ce mélange réactionnel est agité pendant 10 minutes à température ambiante.

La composition du mélange réactionnel en terme de rapport molaire est la suivante :
Si/Al=6 ; F⁻/Si=1,5 ; (R+R')/Si=1 ; R/R'=1 et H₂O/Si=20

Le mélange réactionnel est alors transvasé dans un autoclave de 75 ml revetu de Teflon. La réaction se déroule à 200°C pendant 2 jours. Pendant la synthèse, l'autoclave est continuellement agité, l'axe longitudinal de l'autoclave tourne avec une vitesse d'environ 15 tours/minutes dans un plan perpendiculaire à l'axe de rotation. Après réaction, l'autoclave est refroidi, le solide cristallisé est recueilli par filtration, lavé à l'eau distillé et séché à 80°C pendant 24 heures. Le pH du milieu réactionnel avant et après réaction est d'environ 8.

Le spectre de diffraction des rayons X du produit reccueilli est, après calcination sous air à 550°C, semblable à celui du tableau I de la présente description (structure de type MTW).

Examinée au microscope électronique à balayage, cette zéolithe se présente sous forme de fines aiguilles enchevetrées de 20 à 30 µm de longueur.

Le rapport molaire SiO₂/Al₂O₃ du solide est proche de 38, sa teneur pondérale en fluor, après calcination sous air à 550°C, est de 0,55%.

## Revendications

1. Zéolithe cristalline synthétique de type MTW caractérisée par :
a) la formule générale approchée suivante :
M_{2/n}O, Al₂O₃, xSiO₂
où
M représente un proton et/ou un cation métallique
n est la valence de M
x est un nombre compris entre 14 et 800,
b) un diagramme de diffraction des rayons X représenté dans le tableau I ci-dessous :
| 2θ(°) | I/Io | 2θ(°) | I/Io |
|---|---|---|---|
| 7,45 | 82 | 26,37 | 13 |
| 7,66 | 56 | 26,89 | 12 |
| 8,88 | 30 | 28,02 | 9 |
| 12,15 | 2 | 28,51 | 3 |
| 14,79 | 5 | 29,35 | 5 |
| 15,28 | 6 | 30,98 | 6 |
| 18,76 | 10 | 31,79 | 2 |
| 19,14 | 11 | 32,89 | 1 |
| 20,05 | 7 | 33,83 | 3 |
| 20,91 | 100 | 35,68 | 14 |
| 21,91 | 8 | 36,51 | 2 |
| 22,43 | 15 | 36,99 | 3 |
| 23,05 | 39 | 38,49 | 2 |
| 23,31 | 28 | 43,84 | 1 |
| 23,88 | 5 | 44,64 | 4 |
| 24,52 | 4 | 45,64 | 2 |
| 25,20 | 6 | 46,88 | 2 |
| 25,77 | 7 | | |
c) une teneur en fluor comprise entre environ 0,005 et 2 % en poids, ladite zéolithe ayant été synthétisée en milieu fluorure sous agitation, ce qui entraîne des modifications de propriétés acides et d'échange ionique desdites zéolithes MTW par rapport aux zéolithes MTW synthétisées en milieu OH⁻.

2. Zéolithe selon la revendication 1 caractérisée en ce que x est un nombre compris entre 20 et 800.

3. Zéolithe selon l'une des revendications 1 et 2 caractérisée en ce qu'elle possède une teneur en fluor comprise entre environ 0,01 et 1,5 % en poids.

4. Catalyseur renfermant une zéolithe selon l'une des revendications 1 à 3 et une matrice.

5. Catalyseur renfermant une zéolithe selon l'une des revendications 1 à 3, une matrice et au moins un métal ou/et composé de métal choisi parmi les groupes IA, VIB et VIII de la classification périodique des éléments.

6. Procédé de préparation d'une zéolithe selon l'une des revendications 1 à 3 caractérisé en ce que :
a) on forme un mélange réactionnel en solution ayant un pH inférieur à environ 9 et comprenant de l'eau, au moins une source de silice, au moins une source d'aluminium, au moins une source d'agent mobilisateur contenant des ions fluorure (F⁻), au moins une source d'au moins un agent structurant choisi dans le groupe formé par le diazabicyclo-1,4 (2,2,2) octane et un mélange de diazabicyclo-1,4(2,2,2)octane et de méthylamine, cet agent structurant pouvant éventuellement fournir des cations organiques, ledit mélange réactionnel ayant une composition, en termes de rapport molaire, comprise dans les intervalles de valeurs suivants :
Si/Al : 12-100,
F⁻/Si : 0,5-4,
H₂O/Si : 20-40,
(R+R')/Si : 0,9-2,1,
R/R' : 0,3-infini, où R est le DABCO et R' la méthylamine,
b) on maintient ledit mélange réactionnel sous agitation à une température de chaufage comprise entre environ 100 et 250°C, jusqu'à ce que l'on obtienne un composé cristallin, et
c) on calcine ledit composé à une température supérieure à environ 350°C.

7. Procédé selon la revendication 6 dans lequel, dans l'étape a), ledit mélange réactionnel comprend en outre une source de cations alcalins et/ou alcalino-terreux.

8. Procédé selon l'une des revendications 6 ou 7 dans lequel, dans l'étape b) on maintien ledit mélange réactionnel à une température de chauffage comprise entre environ 150 et 250° C, le mélange réactionnel étant maintenu sous agitation, jusqu'à ce que l'on obtienne un composé cristallin.

## Patentansprüche

1. Synthetischer kristalliner Zeolith vom MTW-Typ, gekennzeichnet durch:
a) die folgende allgemeine Überschlagsformel:
M_{2/n}O, Al₂O₃, xSiO₂,
worin
M ein Proton und/oder ein Metallkation darstellt,
n die Wertigkeit von M ist,
x eine zwischen 14 und 800 enthaltene Zahl ist,
b) ein Röntgenbeugungsdiagramm, dargestellt durch die Tabelle I unten: 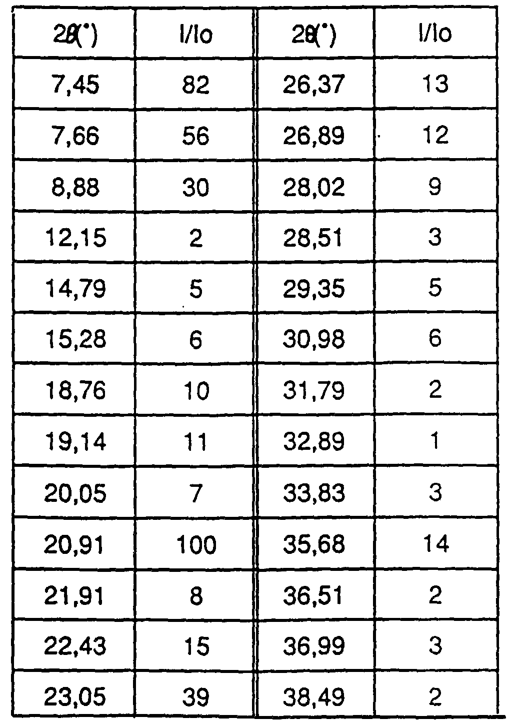 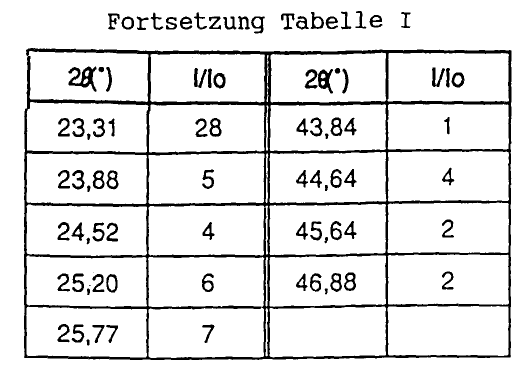
c) einen Gehalt an Fluor, der zwischen einschließlich 0,005 und 2 Gew.% enthalten ist, wobei der Zeolith in Fluoridmilieu unter Rühren hergestellt worden ist, was im Vergleich zu in OH⁻-Milieu hergestellten MTW-Zeolithen Änderungen der sauren Eigenschaften und des Ionenaustausches der MTW-Zeolithe mit sich bringt.

2. Zeolith gemäß Anspruch 1, dadurch gekennzeichnet, daß x eine zwischen 20 und 800 enthaltene Zahl ist.

3. Zeolith gemäß einem der Ansprüche 1 und 2, dadurch gekennzeichnet, daß er einen zwischen etwa 0,01 und 1,5 Gew.% enthaltenen Fluorgehalt besitzt.

4. Katalysator, der einen Zeolith gemäß einem der Ansprüche 1 bis 3 und eine Matrix umfaßt.

5. Katalysator, der einen Zeolith gemäß einem der Ansprüche 1 bis 3, eine Matrix und wenigstens ein Metall und/oder eine Verbindung eines Metalls, das aus den Gruppen IA, VIB und VIII des Periodensystems ausgewählt ist, umfaßt.

6. Verfahren zur Herstellung eines Zeolithes gemäß einem der Ansprüche 1 bis 3, dadurch gekennzeichnet, daß
a) man eine Reaktionsmischung in Lösung bildet, welche einen pH-Wert von unter etwa 9 besitzt und Wasser, wenigstens eine Siliciumquelle, wenigstens eine Aluminiumquelle, wenigstens eine Mobilisatormittelquelle, welche Fluoridionen (F⁻) enthält, wenigstens eine Quelle wenigstens eines Strukturiermittels, das aus der durch das Diazobicyclo-1,4 (2,2,2)octan und einer Mischung von Diazobicyclo-1,4 (2,2,2)octan und Methylamin gebildeten Gruppe ausgewählt ist, wobei dieses Strukturiermittel gegebenenfalls organische Kationen liefern kann, umfaßt, wobei die Reaktionsmischung in Molverhältnis eine Zusammensetzung besitzt, welche in den folgenden Werteintervallen enthalten ist:
Si/Al: 12 - 100,
F⁻/Si: 0,5 - 4,
H₂O/Si: 20 - 40
(R+R')/Si: 0,9 - 2,1
R/R': 0,3-unendlich, worin R DABCO und R' Methylamin ist,
b) man die Reaktionsmischung bei einer zwischen 100 bis 250°C enthaltenen Heiztemperatur unter Rühren hält, bis man eine kristalline Verbindung erhält, und
c) man die Verbindung bei einer Temperatur von über etwa 350°C kalzinert.

7. Verfahren gemäß Anspruch 6, worin im Schritt a) die Reaktionsmischung des weiteren eine Quelle von Alkali- und/oder Erdalkalikationen umfaßt.

8. Verfahren gemäß einem der Ansprüche 6 oder 7, worin man im Schritt b) die Reaktionsmischung bei einer zwischen einschließlich etwa 150 und 250°C enthaltenen Heiztemperatur hält, wobei die Reaktionsmischung unter Rühren gehalten wird, bis man eine kristalline Verbindung erhält.

## Claims

1. Synthetic crystalline zeolite of the MTW type characterized by :
a) the following approximate general formula:
M_{2/n}O, Al₂O₃, xSiO₂
in which M represents a metal cation and/or a proton, n is the valency of M and x is a number between 14 and 800,
b) a X-ray diagram shown below :
| 2θ(°) | I/Io | 2θ(°) | I/Io |
|---|---|---|---|
| 7.45 | 82 | 26.37 | 13 |
| 7.66 | 56 | 26.89 | 12 |
| 8.88 | 30 | 28.02 | 9 |
| 12.15 | 2 | 28.51 | 3 |
| 14.79 | 5 | 29.35 | 5 |
| 15.28 | 6 | 30.98 | 6 |
| 18.76 | 10 | 31.79 | 2 |
| 19.14 | 11 | 32.89 | 1 |
| 20.05 | 7 | 33.83 | 3 |
| 20.91 | 100 | 35.68 | 14 |
| 21.91 | 8 | 36.51 | 2 |
| 22.43 | 15 | 36.99 | 3 |
| 23.05 | 39 | 38.49 | 2 |
| 23.31 | 28 | 43.84 | 1 |
| 23.88 | 5 | 44.64 | 4 |
| 24.52 | 4 | 45.64 | 2 |
| 25.20 | 6 | 46.88 | 2 |
| 25.77 | 7 | | |
c) a fluorine content between approximately 0.005 and 2 % by weight, said zeolite having been synthesized in a fluoride medium, accompanied by stirring, which leads to changes of acid and ion exchange properties of said MTW zeolites versus the MTW zeolites synthesized in a OH⁻ medium.

2. Zeolite according to claim 1, characterized in that x is a number between 20 and 800.

3. Zeolite according to either of the claims 1 and 2, characterized in that it has a fluorine content between approximately 0.01 and 1.5 % by weight.

4. Catalyst containing a zeolite according to any one of the claims 1 to 3 and a matrix.

5. Catalyst containing a zeolite according to any one of the claims 1 to 3, a matrix and at least one metal and/or metal compound chosen from among groups IA, VIB and VIII of the periodic classification of elements.

6. Process for the preparation of a zeolite according to any one of the claims 1 to 3, characterized in that:
a) a reaction mixture in solution is formed having a pH below approximately 9 and containing water, at least one silica source, at least one aluminium source, at least one mobilizing agent source containing fluoride ions (F⁻), at least one source of at least one structuring agent chosen from within the group formed by 1,4-diazabicyclo-(2,2,2)-octane and a mixture of 1,4-diazabicyclo-(2,2,2)-octane and methyl amine, said structuring agent optionally supplying organic cations, said reaction mixture having a composition, in molar ratio terms, within the following value ranges:
Si/Al : 6-300,
F⁻/Si : 0.1-8,
H₂O/Si : 4-50,
(R+R')/Si : 0.5-4,
R/R' : 0.1-infinity, in which R is DABCO and R' methyl amine.
b) the said reaction mixture is maintained under stirring at a heating temperature between approximately 100 and 250°C until a crystalline compound is obtained and
c) said compound is calcined at a temperature above approximately 350°C.

7. Process according to claim 6, wherein, in stage a), said reaction mixture also incorporates an alkali metal and/or alkaline earth cation source.

8. Process according to any one of the claims 6 or 7, wherein, in stage b), said reaction mixture is maintained at a heating temperature between approximately 150 and 250°C, the reaction mixture being kept under stirring until a crystalline compound is obtained.
